(19) Europäisches Patentamt

European Patent Office

Office européen des brevets

(11) **EP 4 439 329 A1**

(12) **EUROPEAN PATENT APPLICATION**

(43) Date of publication:
**02.10.2024 Bulletin 2024/40**

(21) Application number: **23315076.2**

(22) Date of filing: **31.03.2023**

(51) International Patent Classification (IPC):
*G06F 16/21* (2019.01)

(52) Cooperative Patent Classification (CPC):
**G06F 16/217**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Amadeus S.A.S.
06410 Biot (FR)**

(72) Inventors:
• **LE GRAND, Guillaume
06410 Biot (FR)**

• **AMADIEU, Olivier
06410 Biot (FR)**
• **CAZORLA, Jean-Marie
06410 Biot (FR)**
• **DANIEL, Jerome
06410 Biot (FR)**
• **DEVAUX, Yannick
06410 Biot (FR)**
• **GUYOMARC'H, Erwan
06410 Biot (FR)**

(74) Representative: **Samson & Partner Patentanwälte mbB
Widenmayerstraße 6
80538 München (DE)**

(54) **DATABASE SEARCH PROCESSING**

(57) A search engine determines, based on a current configuration and a received search request, a number of processing parameters indicative of processing resources of the search engine to be utilized for processing the search request. The search engine determines a number of search results for the search request utilizing the processing resources of the search engine according to the number of processing parameters and returns a number of search results. The search engine determines a number of quality-of-service indicators for the returned search results and logs a state of the search engine indicating the processing resources of the search engine utilized for determining the number of search results and quality-of-service indicators. The current configuration of the search engine is updated based on the logged state of the search engine and the determined number of quality-of-service indicators to obtain an updated configuration of the search engine for processing future search requests.

FIG. 1

**Description**

**FIELD**

This disclosure generally relates to information technology. More specifically, the disclosure relates to processing search requests in an information technology search environment.

**BACKGROUND**

Search systems in information technology face increased level of complexity and volume. Search request traffic grows continuously and quality-of-service requirements increase at the same time. Search request processing also may feature dynamic computation of search results at search request times. In distributed search systems, search results or underlying computation data may also be retrieved from distributed data sources. Higher standards of quality of service such as short response times cannot solely be maintained by more performant hardware.

Hence, generally, methodologies are sought which facilitate efficient processing of search requests.

**SUMMARY**

The present mechanisms are set forth by the independent claims.

According to a first aspect, a method for processing a search request is provided. The method is performed in a search system which comprises a search engine handling the search. The method includes receiving the search request including a number of search parameters. Based on statistical data from previous search requests with similar search parameters, a likelihood of a client selection of at least one search result corresponding to the number of search parameters is determined. Based on the likelihood of the client selection, a number of processing parameters indicative of processing resources of the search platform to be utilized for processing the search request is determined. Further, a number of search results for the search request utilizing the processing resources of the search platform according to the processing parameters is determined. At least a part of the number of search results is returned.

In some embodiments, the processing parameters indicate one or more of a degree of parallelization, a number of search results to be determined, a number of search results to be returned, an amount of central processing unit resources, a memory utilization measure, a network load measure, a polling measure, a provider contribution indication, a caches utilization measure, a machine learning utilization measure, a routing indication, a search depth indication, a search processing time limit, a measure for validating pre-computed search results, a search result complexity measure, a search side-processes indication.

In some embodiments, in response to determining that the likelihood of the client selection is above a threshold, the number of processing parameters is determined to indicate a greater amount of processing resources of the search platform to be utilized for processing the search request; in response to determining that the likelihood of the client selection is below the threshold, determining the number of processing parameters to indicate a lower amount of processing resources of the search platform to be utilized for processing the search request.

In some embodiments, the likelihood of the client selection is determined by using a machine learning model.

In some embodiments, the statistical data is updated in response to receiving a client selection for one or more of the returned search results.

In some embodiments, the statistical data is updated in response to determining an absence of a client selection after a given period of time passed since returning at least a part of the number of search results.

In accordance with a second aspect, a search system is arranged to perform any one of the aforementioned method aspects and embodiments. The search system may include a search engine which processes search requests.

In accordance with a third aspect, a computer program is provided which makes one or more processors of a computer to execute the aforementioned method aspect and embodiments when the computer program is run on the computer. The computer program may be embodied as computer program product such as a computer-readable non-transitory storage medium which stores program instructions. The program instructions may be executed by one or more processors of a computer to realize the functionalities taught herein.

Further refinements of the aspects and embodiments are set forth by the description.

**BRIEF DESCRIPTION OF THE FIGURES**

Aspects and examples of the present disclosure are described with reference to the following figures, in which:

FIG. 1 schematically shows an exemplary search system implementing the present methodologies.

FIG. 2 visualizes a message sequence utilized by a search engine.

FIG. 3 is a flowchart presenting activities of the methodologies described herein.

FIG. 4 schematically depicts treatment of a search request.

FIG. 5 represents a determination of search engine configurations for different levels of processing resources and search parameters.

FIG. 6 shows relations between processing resources and likelihoods of client selections.

FIG. 7 provides an example of statistical data as utilized and updated by the search engine.

FIG. 8 represents a functionality to handle search requests with an uncertain likelihood of client selection. ,

FIG. 9 shows a computerized system for implementing a server, database system and/or client device as described herein.

## DETAILED DESCRIPTION

The present disclosure addresses a technical problem in information technology, and more specifically in search systems which process search requests from a client. A search request sent by and received from a client includes one or more search parameters, i.e. one or more parameter-value pairs, which indicate a strict or fuzzy search space limitation. The search system typically includes one or more search engines, i.e. a computerized machine, equipped with hardware and software to process the search request, take measures to identify search results corresponding to the search parameters and returning, if at least one search result has been identified, the at least one search result to the requesting client.

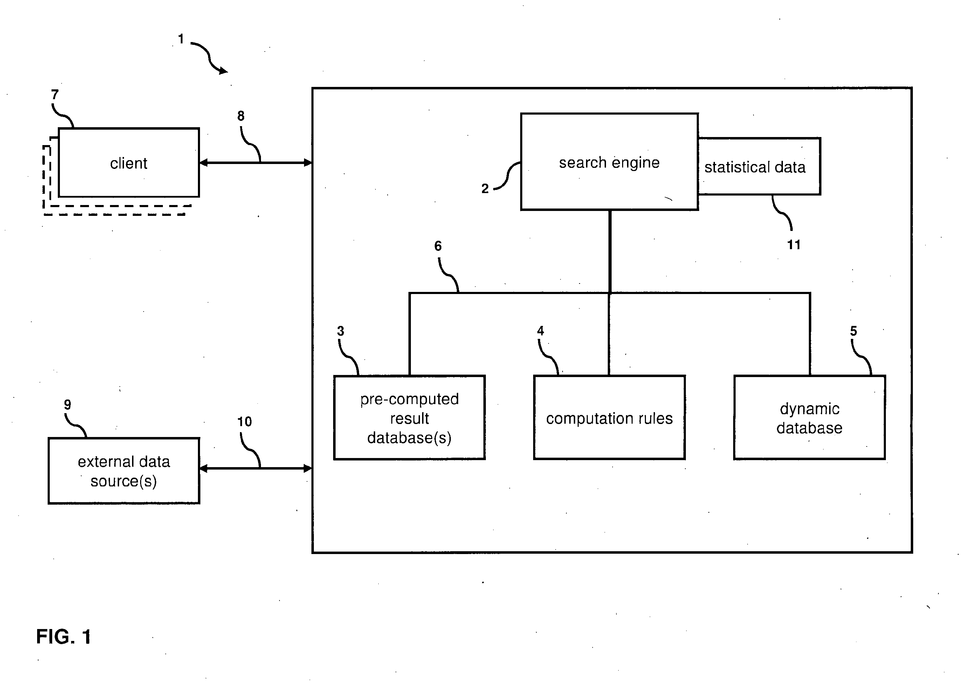

A typical, simplified and schematic search system 1 is shown by FIG. 1. The search system 1 includes the search engine 2 which is communicatively coupled to one or more clients 7 over a communication interface 8. The communication interface 8 may utilize any sorts of communication technology such as wired and/or wireless communication and/or mobile communication networks, one or more local area network, and/or one or more wide area networks such as the Internet, as well as any sorts of communication protocols such as WiFi, Ethernet, Internet Protocol (IP), Transport Control Protocol (TCP), Hypertext Transfer Protocol (HTTP) and others. Search requests from the client(s) 7 and responses to the search requests are sent over the communication interface 8.

Typically, the search engine 2 may also have access to internal data sources which may be geographically and/or operationally co-located (as visualized by the outer box in FIG. 1, e.g. part of a local area network or virtual local area network) with the search engine 2. For example, the search engine 2 may be communicatively coupled, via a further communication interface 6, to one or more caches such as pre-computed result database(s) 3. Typically, such pre-computed result database(s) 3 may provide access to pre-computed search results in an efficient way in terms of computation resources and network load, but there may be a possibility that one or more of the pre-computed search results are outdated at the time of retrieval by the search engine 2.

On the other hand, the search engine 2 may also be capable of computing search results dynamically in response to receiving a search request. To this end, for example, the search engine 2 accesses a database including computation rules 4 as well as a data source including underlying data for dynamically computing one or more search results using the computation rules, such as dynamic database(s) 5. A non-limiting, purely illustrative example is the computation of a price of a travel offer based on fares, wherein the fares are determined in correspondence with at least a part of the search parameters. Typically, such dynamic computation is more costly in terms of computation resources, response time and network load compared to retrieving a number of cached search results from the pre-computed result database(s) 3.

At still another level, the search engine 2 may be interconnected to one or more external data sources 9, via still a further communication interface 10. The external data source 9 may provide other or further search result corresponding to the search parameters. Again, an external data source 9 may respond with cached/pre-computed search results and/or search results dynamically computed at request time.

These different ways to identify one or more search results are not mutually exclusive, but may be employed in parallel, in sequence, or in a combined manner. For example, the search engine 2 may retrieve underlying data from an external data source 9 to populate or update the underlying data held in the dynamic database(s) 5 and then dynamically compute a number of search results using computation rules 4 and the underlying data in the dynamic database(s) 5. A non-limiting, purely illustrative example concerns availability of items in a web shop sought by a search request. The current availability of the items may first be determined by contacting the provider of the items, i.e. the external data source(s) 9. Insofar the items are available, the current price and delivery time is calculated by the search engine 2 using computation rules 4 previously and asynchronously provided by the providers.

The search engine 2 further has freedom to employ different degrees of technical resources to process a search request. Dimensions and processing parameters may include

- time utilized for identifying the search results and corresponding response time from the perspective of the client;

- data sources to be utilized for identifying the search results, e.g. cache only, no retrieval from external data source(s) 9, and distributions among the data sources to be contacted, e.g. a polling factor indicating a relation between requesting external data sources and local search result identification;

- number of search results to be identified, e.g. at least 100 search results;

- number of search results to be returned to the client, i.e. at least 10 search results;

- amount of computation resources, e.g. central processing unit (CPU) resources (e.g. number of CPUs), memory resources, disk resources, network resources,

- accuracy of search results, e.g. measures of validating pre-computed search results;

- diversity of search results, e.g. heterogeneity of parameter values of identified search results;

- degree of parallelization, e.g. contacting a certain number of external data sources in parallel vs. contacting only a smaller number of external data sources first and then conditionally retrieving further search results from still other data sources only subsequently;

- findability of search results, e.g. exhaust search sufficiently in order to increase likelihood that a certain type or category of search results is not missed.

This list is not exhaustive and other variations and degrees of freedom of how resources are employed to process a given search results may be used by the search engine. The technical problem addressed by the present methodologies is to render processing search results more efficiently given the aforementioned complexity and degrees of freedom to employ technical resources available to the search engine 2.

Solutions are provided in form of methods, systems, apparatuses, computer-readable mediums, computer-program instructions, computer programs etc. for processing a search request. Generally, the present methodologies seek to dynamically adjust the technical measures utilized for processing a search request and thus dynamically adjust the quality of service of search request processing. The general aim is to fine-tune the efforts taken for processing a search request in order to utilize the available technical resources of the search system 1 efficiently. The present methodologies can thus provide improvement options in terms of scalability, search processing complexity, coping with a significant increase of search request volume and efficient use of energy observing the environmental impact of search processing.

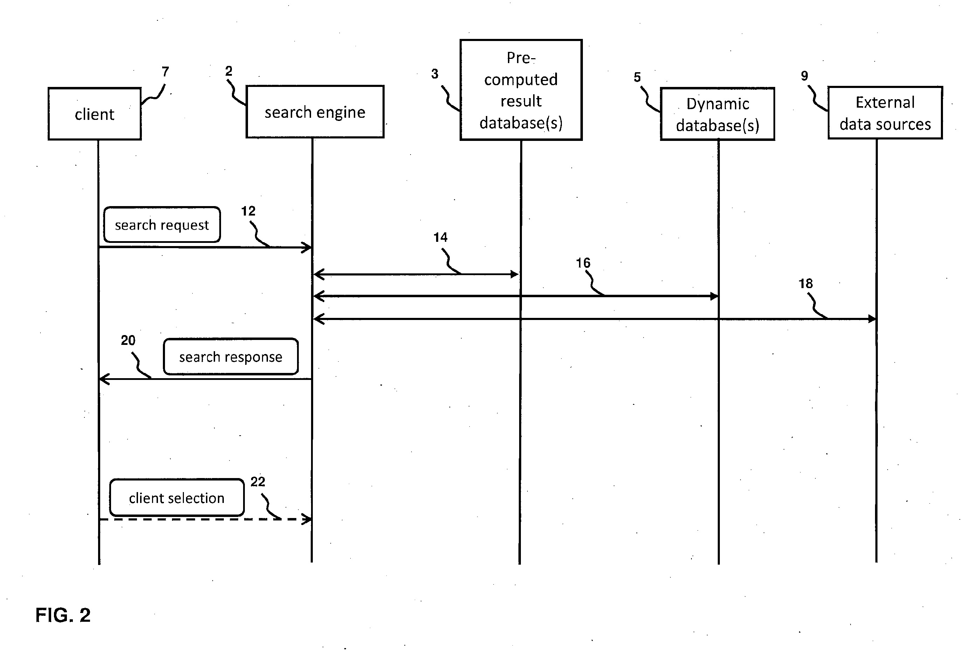

The methodologies are executed at the search engine 2 for a search request received from a client 7, such as search request 12 shown in FIG. 2. Hence, the methodologies are applied for an individual search request and at search request time. The search request may be realized by and according to any suitable search request protocol such as structure database query protocols, application request/response protocols, web-based request/response protocols, etc. The data structure of the search request may include a header portion indicating control data such as a request type, an indication of the requesting client, an indication of one or more quality of service requirements, and so on, as well as a payload portion containing a number of search parameter-value pairs.

FIG. 2 provides a message sequence chart outlining a general flow of search request processing. The client 7 issues a search request 12 which is received by the search engine 2. The search engine 2 processes the search request 12 according to the methodologies discussed herein. Processing the search request 12 may involve one or more of retrieving 14 cached search results from one or more pre-computed result database(s) 3, computing search results by utilizing 16 dynamic database(s) 5 and requesting and retrieving 18 search results from external data source 9. At some point, the search engine 2 has determined a number of search results. Generally, one or more of the determined number of search results are then returned to the client 20 by way of a search response. The search response may include multiple messages. For example, the search engine 2 may return the search results incrementally dependent on the times when the search results are determined by the search engine. For example, search results determined by utilizing the pre-computed result database(s) 3 may be available for transmission to the client 7 earlier than search results determined by retrieval 18 from the external data sources 9.

At some later point in time, the client 7 may indicate a client selection 22 to the search engine 2, i.e. a subset of one or more of the search results returned with the search response 20. The selected search results may trigger a follow-up processing by the search system 1, such as a follow-up search process handled by the search engine 2 typically employing the same methodologies as the initial search request. Such follow-up search process may e.g. concern a search for search results related to the selected one or multiple search results, e.g. an upsell transaction, a gift packaging, an add-on purchase, or the like, or a follow-up process such as a download, upload or write, booking, purchase, reservation, payment, or any other process relating to the one or more selected search results. Such follow-on process may typically be handled by another entity of the system 1 or even by an entity outside system 1, such as a reservation engine or a payment server or the like. Hence, the client selection 22 may also be directed to such other entity within or outside the system 1.

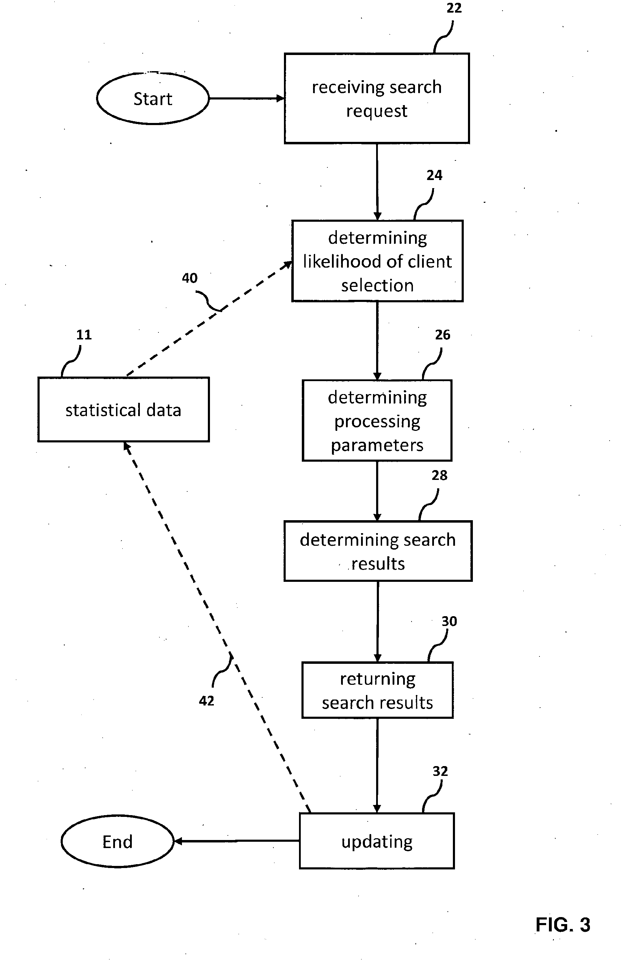

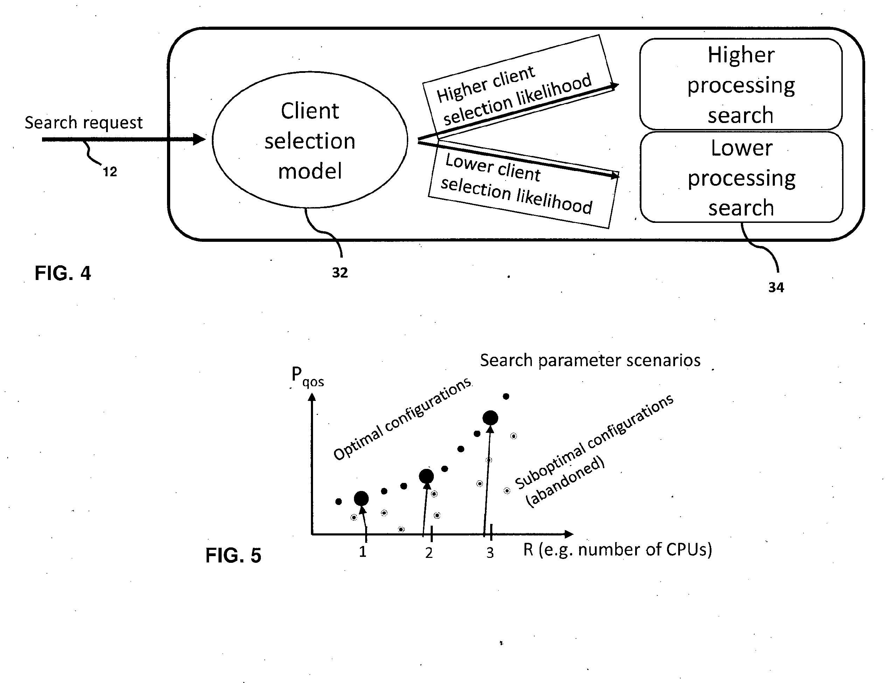

The general mechanisms of the present disclosure can be discussed with reference to FIG. 3 which visualizes various activities for handling an individual search request. In response to receiving the search request 12, the search engine 2 determines 24 a likelihood of a client selection for search results which are to be returned in response to the search request 12. For example, the search engine 2 utilizes a machine-learning model 32 (cf. FIG. 4) to derive a likelihood of a client selection for the present search request and corresponding search results based on the statistical data 11 (visualized by arrow 40 in FIG. 3). The statistical data 11 may also form a part of such model, e.g. as previous input or training data. Alternatively or in addition, the search engine 2 may also employ a set of rules to determine a likelihood of client selection based on the statistical data 11.

The likelihood of client selection may refer to a search result selection by the client 7. To this end, generally, any feedback from the clients 7 received on the basis of search response may be evaluated and may be stored as part of the statistics 11. In particular, the client 7 may select one or more of the returned search results and provide a client selection 22, as described above with reference to FIG. 2. The search result selection may indicate if the client 7 reverts back to the search system 1 with a client selection at all, and, if affirmative, how many and/or which search results have been selected. This client selection 22 may constitute an objective indication of the quality of the service of the search processing by the search engine 2 from the perspective of the clients 7.

In dependency of the determined likelihood of a client selection, the search engine 2 determines 26 a technical search processing setting, which includes a number of processing parameters indicative of processing resources which the search engine 2 is allowed to utilize for processing the search request. The processing parameters may directly determine the amount of processing resources of the search engine 2 to be utilized for processing the search request. For example, a degree of parallelization may specify how many databases, caches or provider servers the search engine 2 may contact at the same time. Other processing parameters such as CPU utilization may serve as indirect parameters and/or may be interrelated with direct or other indirect processing parameters. The relations between such interdependent processing parameters may be known, e.g. from reverse engineering of the search engine 2. E.g. by setting a direct processing parameter, an indirect processing parameter such as CPU utilization may be set and controlled. The presently described processing parameters encompass direct, indirect, independent and interdependent processing parameters.

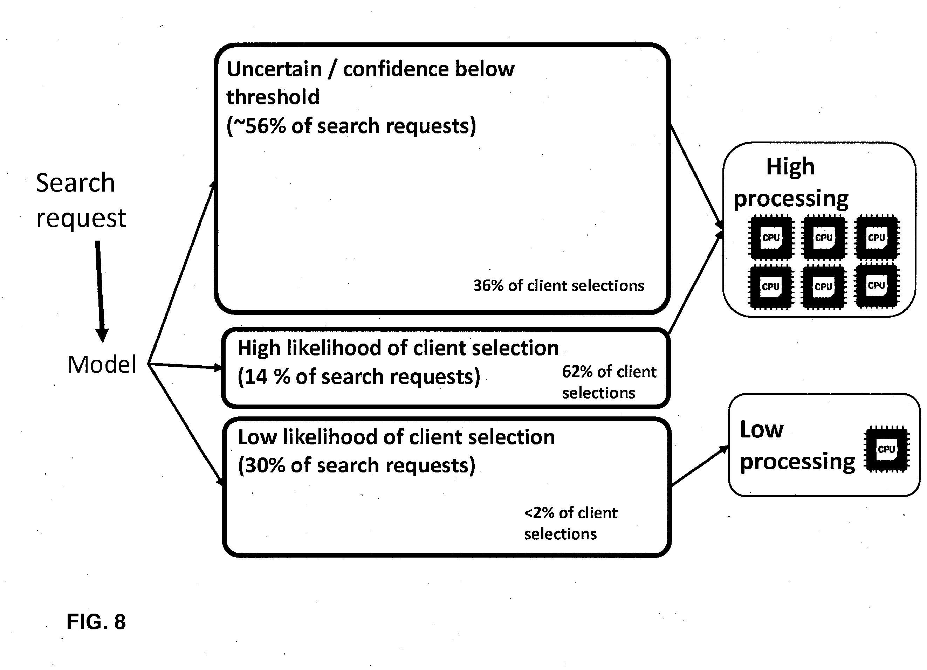

In response to determining that the likelihood of the client selection is above a threshold, the search engine 2 may determine the number of processing parameters to indicate a greater amount of processing resources of the search platform to be utilized for processing the search request 12. In response to determining that the likelihood of the client selection is below the threshold, the search engine 2 may determine the number of processing parameters to indicate a lower amount of processing resources of the search platform to be utilized for processing the search request 12 (cf. FIGS. 4 and 8 described in more detail below).

The processing parameters relate to technical resources available to the search engine and determine which technical resources and amount of the technical resources are available to be used for processing a current search request. The actually used processing resources of the search engine may exhaust these target processing parameters, but may also be less than the target processing parameters. For example, in some embodiments, the processing parameters include one or more of

- a degree of parallelization: As visualized in FIGS. 1 and 2, the search engine 2 may determine the search results by utilizing multiple sources such as caches (pre-computed result databases 3), dynamic databases 5 and/or external data sources 9. Each of these types of sources for determining the search results may by formed by one or multiple sources, e.g.- K caches 3, N dynamic databases 5 and M external data sources 9. The degree of parallelization may determine how many sources, absolutely or for a given type of sources, the search engine 2 may contact in parallel. For example, the degree of parallelization may indicate that the search engine 2 requests three external data sources 9, such as three service providers, at the same time to provide search results corresponding to the search parameters. Parallelization may be implemented by splitting the overall search into smaller search packages, each search packages being defined by search parameters that define smaller scopes, and these search packages cover the initial search scope as defined by the initial search parameters. Generally, the higher the degree of parallelization is, the higher the chance to obtain relevant search results and/or the faster the search process may be, but also the computational efforts including network load increases.

- a caches utilization measure: this indicates whether or not the search engine 2 utilizes any caches such as the pre-computed result database(s) 3 to determine the search results. Utilizing caches may be computationally-wise less expensive than utilizing other data sources such as dynamic databases 5 and/or external data source 9, but search results originating from caches may be outdated or less valid. The caches utilization measure may indicate whether or not caches such as the pre-computed result database(s) 3 are to be utilized for processing the search request 12.

- a polling measure: likewise, this indicates whether or not the search engine 2 utilizes any original data sources such as the external data sources 9 to determine the search results. Utilizing external data sources 9 may be computationally-wise and network-load-wise more expensive than utilizing cache data sources or data sources internal to the search engine 2, but search results originating from external sources 9 may likely or with certainty be valid. The polling measure may indicate a number of queries to such external or original data sources, such as an absolute number of queries per time unit (e.g. 100 per hour) or a relative portion of overall queries to data sources (e.g. 10% of contacted data sources may be external or original data sources).

- a provider contribution indication: The search engine 2 may have freedom to utilize external data sources in different manners, e.g. by cascading requests to external sources pending intermediate outcomes of basic requests to external sources. In practice, there may also be different types of external sources such as faster and slower external sources, primary and secondary external sources, external sources providing basic search result data and external sources providing refinement or add-on search result data. The provider contribution indication may indicate which providers the search engine 2 may contact in which manner. For example, restricting requests to certain external sources may avoid additional processing resulting of the delegation to a third-party system. Note that the provider contribution indication may be included in the polling measure.

- an amount of processing unit resources: The search engine 2 may utilize various levels of computational resources to determine the search results. For example, the search engine 2 may be equipped with multiple central processing units (CPU), CPU clusters, graphical processing units (GPU) to employ machine learning (ML) mechanisms, and so on. The indicator of an amount of processing unit resources may indicator how much processing resources are to be utilized for determining the search results. This indicator may be measured e.g. in processing time, a number of processing units to be utilized, an amount of instructions, etc.

- a number of search results to be determined: This indicates the number of search results to be determined by the search engine 2. Based on the number of determined search results, the search engine 2 may select a subset of search results to be returned to the client. The number of search results to be determined may also referred to as search depth. For example, in embodiments of a graph-based or tree-based search, the number of search results to be determined may become higher with a higher number of edges or hierarchy levels traversed. Generally, the higher the number of search results is, the higher the chance to obtain relevant search results may be, but also the computational efforts including network load increases.

- a number of search results to be returned: This indicates the number of search results to be returned to the client 7 by the search engine 2. Based on the number of determined search results, the search engine 2 may select a subset of search results to be returned to the client. Generally, the higher the number of search results is, the higher the chance to obtain relevant search results may be, but also the computational efforts including network load increases.

- a machine learning utilization measure: the search engine 2 may utilize machine learning mechanisms to intelligently determine the search results. Such machine learning mechanisms may involve computational-expensive executions e.g. by GPUs or special hardware.

- utilizing different kinds of hardware: some computing machines realizing the search may offer higher performances (hence the possibility for a reduced response time or for a deeper search) than other computing machines with less performant hardware. However, such high-end hardware may not be available to an unlimited amount. Thus, the search engine 2 may utilize high-performance of hardware for a variable certain portion of the search (e.g. 10%, 20%, 30%).

- a routing indication: the search engine 2 may utilize computation resources such as modules or units which are associated with the search engine 2, such as server farms and/or cloud services. The routing indication may indicate how many or which of such modules or units can be utilized by the search engine 2, i.e. to which of these units or modules the search engine 2 relays or routes requests to process the search response.

- a search processing time limit: amount of time which the search engine 2 takes to process the search request.

- a search result complexity measure: The complexity and size of search result may vary. The search result complexity measure may indicate e.g. that the search engine composes search results with a simplified data structure as opposed to more complex data structure. In terms of e.g. products represented by the search results (e.g. in case of a web shop), a more complex search result may be a bundle of multiple products whereas simplified search results may relate to individual products. In terms of e.g. travel offers, a simplified search result is a direct flight, whereas a more complex search result may relate to a multi-leg flight connection. Making the search engine 2 to provide less complex search results may simplify the search process by avoiding costly search result construction in terms of search processing resources. Hence, the search result complexity measure may be considered as an indirect processing parameter having an indirect impact on the processing resources to be utilized by the search engine 2.

- a personalization indication: The search engine 2 may have freedom to take into account personalization, e.g. preferences specified by a client profile. Such personalization may generally cause a higher utilization of processing resources, while as conducting the search generically may lead to a lower utilization of processing resources. Thus, similar to the search result complexity measure, the personalization indication may be considered to be an indirect processing parameter. Note that the personalization indicator could be included in the above search result complexity measure.

- a search side-processes indication: Search processing by the search engine 2 may also encompass secondary processes which do not directly yield the determining of search results, but constitute additional actions in the course of search processing. For example, the search engine 2 may log the search process (beyond the logging functionalities for the present methodologies explained below), such as logging the search request 12 and a summary of the returned search results. The search engine 2 may also cache some or all of the returned search results, and even search results which were determined, but not returned to the client 7. The search engine 2 may also output reports or communicate information about the search for any purposes. The processing resources utilized for such side processes may be specified and limited by the search side-processes indication.

The statistical data 11 of the search engine 2 enables the search engine 2 to determine 24 a likelihood of client selection and then further a set of processing parameters based on the search request 12. The search engine 2 may be able to select from multiple pre-configured sets 34 of processing parameters (FIG. 4) from which the search engine 2 selects one set of processing parameters to be applied for the present search processing. For example, a first set of processing parameters (FIG. 4) may specify a light-weight search processing employing relatively few technical resources in order to provide search results relatively fast and cheap (in terms of processing resources), i.e. by way of a lower processing search. A second set of processing parameters may specify a heavy-weight search processing employing substantially more technical processing resources than the light-weight search processing, i.e. a higher processing search. And a third set of processing parameters (not shown in FIG. 4) may specific a medium-weight search processing employing more technical resources than the light-weight search processing, but less technical resources than the heavy-weight search processing. Any number of such given sets of processing parameters may be configured and available for selection by the search engine 2.

In some embodiments, the search engine 2 may also be configured to freely and dynamically determine the processing parameters for the present search request 12. For example, the may be a linear or non-linear relation between the likelihood of client selection determined at 24 and a number of processing parameters. Such relations may be defined by rules or tables which may facilitate the determination of processing parameters 26. Such free determination may functionally correspond to a high number of pre-configured sets of processing parameters and a corresponding of thresholds differentiating between a selection of a given one of the pre-configured sets. The relation between the likelihood of client selection and the processing parameters may be represented by a trained machine-learning model which inputs the determined client selection likelihood and outputs a set of processing parameters indicating the processing resources to be utilized for the present search.

As visualized by FIG. 4, based on past search requests, returned search responses for the past search requests and client selections received for such returned search responses, a model 32 may be formed that predicts how likely a search by the client 7 is followed-up by a subsequent selection of at least one search response. For a high likelihood of client selection, e.g. a likelihood above a threshold, a deep or high-quality search is run. For a lower likelihood of client selection, e.g. a likelihood below the threshold, a reduced search scope can be taken which e.g. relies more on caches 3 than on external data sources 9.

This procedure leads to an improved ratio between utilized processing resources and quality of service of the search. More specifically, this procedure leads to an improved ratio between utilized processing resources, R, and quality of service represented by client selection of search results returned in response to the search request, P. This ratio can be expressed by

$$\frac{R}{P} \quad \text{[equation 1]}$$

which can be aimed to be maximized by the search system 1.

Further refined, the likelihood of client selection P may be composed of several sub-likelihoods. On the one hand, the likelihood of actually receiving a client selection 22 may depend on the general likelihood of client selection of a search result that exists in the search system 1 and could actually be returned in the search response 20 if found by the search. This general likelihood is herein denoted as $P_{gen}$. $P_{gen}$ is independent from the quality of service of the search and the actually returned search results. On the other hand, P may depend on a likelihood of client selection of one of the actually returned search results, $P_{qos}$. $P_{qos}$ is related to the quality of service of the search and the returned search results and is a conditional likelihood referring to the situation that one of the existing search results or the one existing search result underlying $P_{gen}$ is actually found by the search processing and returned to the client 7. If low quality-of-service search results are returned, $P_{qos}$ may be lower than in the situation with high quality-of-service search results. These relations can be expressed by

$$P_{qos} = P \; (\textit{client selection of returned search result} \mid \textit{client selection of existing search}$$

$$\textit{result}) \quad \text{[equation 2]}$$

$$P = P_{gen} \; x \; P_{qos} \quad \text{[equation 3]}$$

In terms of processing costs, the aforementioned relation costs utilized to obtain a certain client selection and the likelihood of client selection may be expressed as

$$\frac{R}{Pgen \; x \; Pqos)} \quad \text{[equation 4]}$$

The present methodologies make use of the insight that the quality of service of the search results returned by the search engine 2 in response to the search request 12 may influence the likelihood of client selection as this is a part of $P_{qos}$, but that the quality of service of the search results does not influence the general likelihood of client selection of an existing search result, $P_{gen}$. Hence, to optimize the ratio between utilized processing resources and quality of service of the search responses, the search engine 2 may determine the processing parameters based on the likelihood of client selection to optimize the ratio

$$\frac{R}{Pqos} \quad \text{[equation 5]}$$

The present methodologies make further use of the insight that the general likelihood of a client selection, $P_{gen}$, is still a part of equation 4 and can be utilized as an indicator to control the processing resources to fine-tune the search despite the aforementioned independence between R and $P_{gen}$. Thus, equation 5 can serve as an optimization criterion.

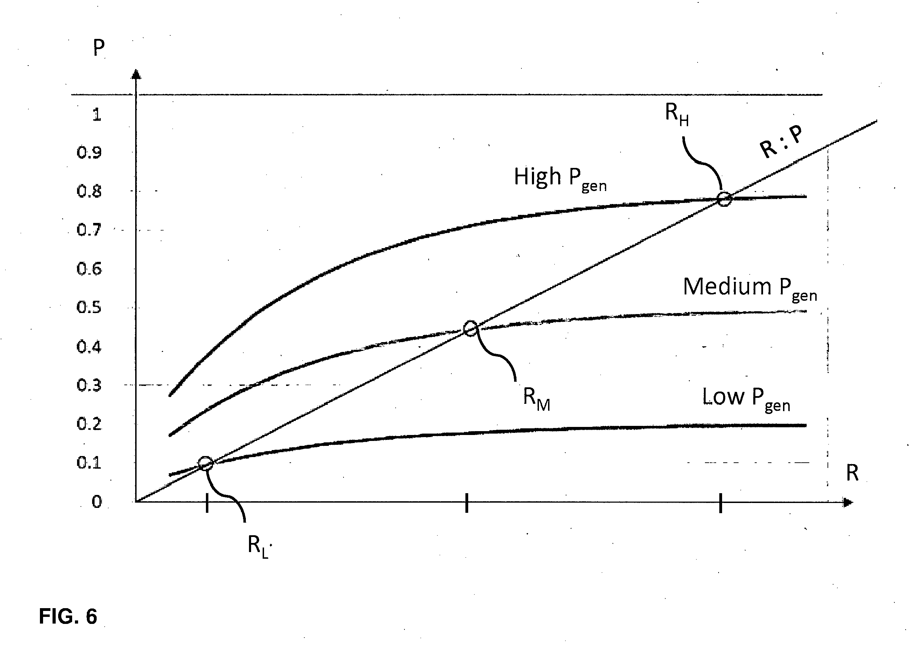

This can be explained with reference to FIG. 6 which visualizes functional relations between R and P. The horizontal axis denotes the processing resources R utilized for processing a search request, the vertical axis denotes P according to equation 2. The line "R : P" shows a possible target ratio between processing costs utilized by the search engine 2 and the likelihood of client selection P. Underlying this ratio, configurations of the search engine 2 may be tested and benchmarked for different search parameters included in the search requests 12 in order to adjust the operation of the search engine 2 to utilize different levels of processing costs in an effective way to provide search results increasing $P_{qos}$. Suboptimal search engine configurations providing search results not promoting $P_{qos}$ are discarded. This is shown by FIG. 5 according to which such search engine configurations for various levels of processing resources (in the simplified representation of FIG. 5 one, two or three CPUs to be utilized for processing a search request) are tested and search results having a higher conditional likelihood $P_{qos}$ are selected as set of processing parameters 34.

Moreover, different levels of $P_{gen}$ are assumed. Search requests 12 may originate from clients 7 with high $P_{gen}$, medium $P_{gen}$ or low $P_{gen}$ which influence the level of the overall likelihood P in different way as visualized by FIG. 6. The crossing points between the "R : P" target ratio and the different functions P(R) according to the different levels of $P_{gen}$ represent suitable amounts of processing resources to be utilized for a search request depending on $P_{gen}$. The processing resource amount $R_L$ is adequate if it is determined that the likelihood $P_{gen}$ is low, the processing resource amount $R_M$ is adequate if it is determined that the likelihood $P_{gen}$ is medium, and the processing resource amount $R_H$ is adequate if it is determined that the likelihood $P_{gen}$ is high. In relation to FIG. 5, for example, one CPU of the search engine 2 is engaged if $P_{gen}$ is determined to be low, two CPUs are engaged if $P_{gen}$ is determined to be medium, and three CPUs are engaged if $P_{gen}$ is determined to be high.

Note that the aforementioned examples of processing parameters and other processing parameters may not necessarily be determined as definite numbers (e.g. 3 CPUs to be used), but may also be determined in the form of ranges (e.g. 2-4 CPUs may be used). Hence, lower (and potentially also higher) boundaries may be described which should not be undercut and exceeded, respectively, by the search engine 2 when processing a search request 12.

Now referring back again to FIG. 3, the search engine 2 then takes measures to determine 28 a number of search results for the search request utilizing the processing resources of the search engine 2 according to the number of processing parameters. The measures to determine 28 the number of search results observe the previously determined processing parameters. For example, the processing parameters specify that the search processing includes contacting three external data sources 9 in parallel, the search engine 2 identifies three external data sources 9 to be contacted based on the search parameters of the search requests and submits corresponding search requests to these three external data sources 9.

The search engine 2 returns 30 at least a part of the number of search results to the requesting client 7 (response 20 in FIG. 2).

After having concluded the search processing and having returned 30 the search results, the search engine 2 stands by for determining if and which client selection does occur. As explained above, the client selection relates to a search result selection constituting feedback from the client 7 received on the basis of the search response 20. In particular, the client 7 may select one or more of the returned search results and provide a client selection 22, as described above with reference to FIG. 2. The search result selection may indicate if the client 7 reverts back to the search system 1 with a client selection at all, and, if affirmative, how many and/or which search results have been selected. This client selection 22 may constitute an indication of the quality of the service of the search processing by the search engine 2.

Observing the client selection 22 may involve various activities. For example, the search engine 2 may wait for a given period of time to see whether any client selection 22 from the particular client 7 which was provided with the search results by way of the search response 20 at all. The specific duration of the period of time depends on the use case. For example, the search engine 2 may buffer the returned search results for a time of 20 minutes, expecting that the client 7 provides a client selection 22 within 20 minutes. Hence, the search engine 2 may start a client selection timer when returning 30 the search results. If the client selection timer expires without any client selection 22 from the client 7, the search engine 2 determines that the client 7 has not provided any client selection 22, and may update 32 the statistical data 11 accordingly. In other words, in response to determining an absence of a client selection after a given period of time passed since returning at least a part of the number of search results, the search engine 2 updates the statistical data 11 accordingly. On the other hand, if the client 7 provides a client selection 22 within the given time period (e.g. before the client selection timer expires), a client selection 22 is determined to be present by the search engine 2 and the statistical data 11 is updated accordingly. In other words, in response to receiving a client selection for one or more of the returned search results, the search engine 2 updates the statistical data 11 accordingly. Note that the updating functionality may also be performed by a further functional element of the search system 1, such as a machine-learning training module providing current statistical data 11 to the client selection model 32 for training and refinement purposes.

In some embodiments, observing the client selection 22 involves logging the search requests including search parameters, client information, returned results, processing parameters and amount of utilized resources on the one hand as well as client selections specifying which client selected which returned search result(s) on the other hand. Evaluating client selections then includes a join operation of the search result log and the client selection log to identify which search led to which client selection. Computational complexity is facilitated if a search result identifier is returned by the search engine 2 and a client selection refers to the selected search result(s) by way of the search identifier.

In some embodiments, the statistical data 11 is stored in a memory of the search engine 2 or accessible to the search engine 2. The statistical data 11 may include time series data representing previous search requests, search parameters of the previous search requests, indications of client identity (e.g. IP address of the client 7, client device type, e.g. mobile or personal computer, technical data of the client 7 such as platform, operating system, browser, used communication protocols, etc.), further meta data for the previous search requests (e.g. time of reception of the search requests). The statistical data 11 also includes information about the processing parameters set for a corresponding search as well typically information about the actually utilized processing resources for processing the respective search. The statistical data 11 may also include information representing client selections for the previous search requests.

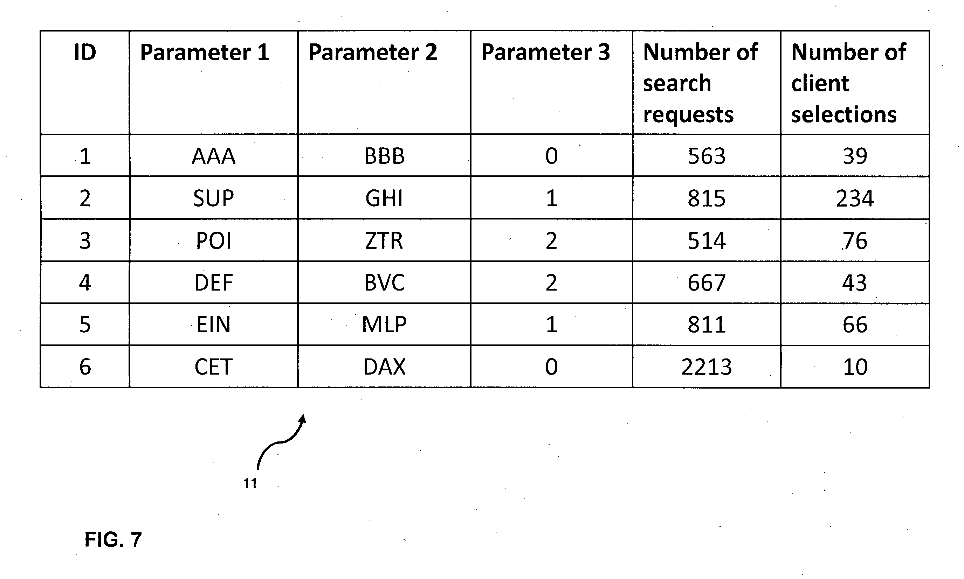

The statistical data 11 may be kept in an aggregated form, for example in form of a table such as exemplarily shown in FIG. 7. The example of FIG. 7 groups the previous search requests according to the search parameters, exemplarily denoted as parameter 1, 2 and 3. ' Note that this may also be a subset of the search parameters included in the search requests and/or parameter values of the returned search results, such as key/value pairs. The table of FIG. 7 also collects the number of search requests asking for the individual search results (which may correspond to the number of occasions in which the search result has been returned to the client 7) as well as the number of corresponding client selections of the search result. As mentioned above, in practical use cases, the statistical data 11 may include additional and/or more refined data such as information about the requesting client 7 and search request meta data.

The statistical data 11 enables the search engine 2 to classify a search request 12 to be related to a certain likelihood of client selection. With reference to the simplified example of FIG. 7, a search request requesting search result ID=2 has a higher client selection rate (234 selections out of 815 search requests) than a search request requesting search result ID=1 (39 selections out of 563 search requests) which, in turn, still has a higher client selection rate than a search request requesting search result ID=6 (10 selections out of 2213 search requests). Thus, for example, the search engine 2 may classify a first search request requesting the search result ID=2 as a search request with $P_{gen}$=high, a second search request requesting the search result ID=1 as a search request with $P_{gen}$=medium and a third search request requesting the search result ID=6 as a search request with $P_{gen}$=low. Accordingly, with reference to the example of FIG. 5, the first search request requesting the search result ID=2 may be processed by utilizing three CPUs, the second search request requesting the search result ID=1 may be processed by utilizing two CPUS, and the third search request requesting the search result ID=6 may be processed by utilizing one CPU.

Depending on the significance and density of the statistical data 11, an estimation of client selection likelihood may not be possible for each and every search request. For example, a search request may request search results which have been rarely returned in the past or which have been recently added to the search system and for which no or no significant statistical data 11 may be available yet. This is shown in FIG. 8 according to which an exemplary search system 1 determines that 56% of the search requests have an uncertain likelihood of client selection (representing 36% of all client selections), 14% of the search requests have a high likelihood of client selection (representing 62% of all client selections received by the search system 1) and 30% of the search requests are associated with a low likelihood of client selection (representing only 2% of all client selections).

Such search requests with uncertain or unknown client selection likelihood may be treated by a default search processing resource configuration, e.g. either without utilizing the present methodologies of determining the processing resources based on the estimated likelihood of client selection, or may determine to apply one of multiple preconfigured search processing parameter sets 34 (FIG. 4). For example, search requests with unknown or uncertain likelihood of client selection may be classified as a higher processing search until the statistical data 11 is rich enough to make a more profound classification. For example, a rule of the search engine 2 may determine that search requests for which the statistical data 11 contains less than a given number of previous search requests (e.g. less than 20 search requests in a certain past time frame) are handled by such default configuration of a high processing search (e.g. three CPUs in the example of FIGS. 5 and 6).

Since the client selection statistics may change over time, the search engine 2 may also purge the statistical data 11 on a regular basis in order to delete outdated statistical data 11. Such purging may be performed asynchronously as a backup process, i.e. independent from the processing of received search requests as depicted by FIG. 3.

By updating 42 the statistical data 11 and applying the updated statistical data for processing future search requests, the present methodologies form a feedback loop according to which determined relations between technical processing resources employed and quality of service achieved for previous search request processing can be evaluated and used to further improve or fine-tune search request processing in future time periods. For example, the updated statistical data 11 may allow the search engine 2 to utilize less technical processing resources in order to obtain search results with a quality of service that satisfies the client 7 issuing the search request and is thus able to save processing resources while obtaining a likewise acceptable search response to the client 7. Hence, efficiency of the search system 1 may be improved.

There might also be a particular situation in which the current configuration 11 of the search engine 2 determines that no technical search processing resources are to be spent for processing a received search request 12. Such situation may, for example, arise when the likelihood of client selection is determined to be close to zero, e.g. if the client 7 is identified as an entity for which no processing resources should be spent (e.g. a robot, spammer, etc.). Hence, in response to receiving such particular search request of the number of search requests within the given time period, the search engine 2 determines, based on the statistical data 11, to utilize no search processing resources. The search engine 2 then returns a search refusal notification to the client 7 (which may be a special type of search response 20). informing the client 7 that the search request is not processed and no search results are returned. In such event, the activities 14, 16, 18 of FIG. 2 and activity 28 of FIG. 3 are not executed. However, this zero processing may be used to update 32 the statistical data 11.

In summary, the present methodologies enable a search engine 2 to fine-tune the utilization of technical processing resources for processing search requests, taking into account the degrees of freedom of technical processing resources to be used as well as quality-of-service indicators for a search request. Due to a feedback loop, the manner and characteristics of previous search request processing can be used to update the statistical data 11 which facilitates an estimation of client selection likelihood steering the determination of processing parameters for a search request.

Note that the present methodologies as described above, if applied by a search engine 2, do not necessarily have to applied for all search requests received by the search engine 2. For example, the search engine 2 may apply the methodologies for some types of search requests, but may not apply the methodologies for other types of search requests which are then handled in a traditional manner. Or the search engine 2 may apply the methodologies for search requests from some clients 7, but not for search requests from other clients 7. Or the search engine 2 may apply the methodologies during some periods of time, but not during other periods of time, etc.

As mentioned above, the present methodologies may be provided by a computer-implemented method, by an apparatus such as a controller as well as by computer program instructions which, when executed by at least one processor, realizes the operations described above.

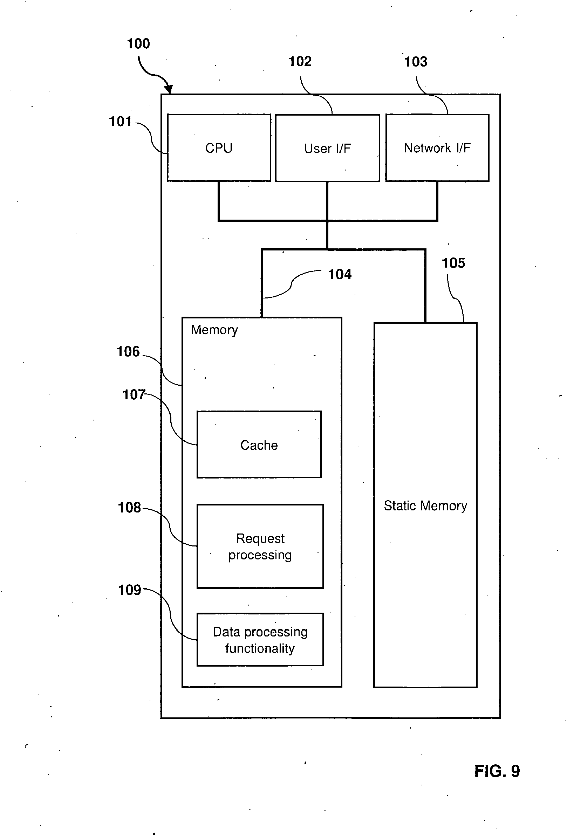

FIG. 9 is a diagrammatic representation of the internal components of a computing machine 100 implementing the functionality of the search engine 2 as well as other entities described herein such as the clients 7. The computing machine 100 includes a set of instructions to cause the computing machine 100 to perform any of the methodologies discussed herein when executed. The computing machine includes at least one processor 101, a main memory 106 and a network interface device 103 which communicate with each other via a bus 104. Optionally, the computing machine 100 may further include a static memory 105 and a disk-drive unit. A video display, an alpha-numeric input device and a cursor control device may be provided as examples of user interface 102. The network interface device 103 connects the computing machine 100 to the other components of the distributed search system 1 such as the clients 7 or the external data sources 9.

The main memory 106 may store temporary program data to facilitate the functionality of the computing machine 100 such as the search engine. For example, the main memory 106 may store computer program data 107 to implement functionalities to receive and process search requests and computer program data 108 to implement functionalities to determine the likelihood of a client selection and processing parameters as well as the other functionalities of the search engine 2 as described above. If the computing machine 100 implements the search engine, the main memory 106 may also store a file or database 109 holding the configuration 11 and or the log 38. The same may also be held in the static memory 105.

A set of computer-executable instructions (computer program code 108) embodying any one, or all, of the methodologies described herein, resides completely, or at least partially, in or on a machine-readable storage medium, e.g., the main memory 106. For example, the instructions 108 may include software processes implementing the functionality to identify a number of search results corresponding to the search request.

The instructions 108 may further be transmitted or received as a propagated signal via the Internet through the network interface device 103 or via the user interface 102. Communication within computing machine 100 is performed via a bus 104. Basic operation of the computing machine 100 is controlled by an operating system which is also located in the main memory 106, the at least one processor 101 and/or the static memory 105.

In general, the routines executed to implement the embodiments, whether implemented as part of an operating system or a specific application, component, program, object, module or sequence of instructions, or even a subset thereof, may be referred to herein as "computer program code" or simply "program code". Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the applicant's general inventive concept.

**Claims**

1. A method for processing a search request, the method comprising, at a search platform:

   receiving the search request including a number of search parameters;
   determining, based on statistical data from previous search requests with similar search parameters, a likelihood of a client selection of at least one search result corresponding to the number of search parameters;
   determining, based on the likelihood of the client selection, a number of processing parameters indicative of processing resources of the search platform to be utilized for processing the search request;
   determining a number of search results for the search request utilizing the processing resources of the search platform according to the processing parameters;
   returning at least a part of the number of search results.

2. The method of claim 1, wherein the processing parameters indicate one or more of a degree of parallelization, a number of search results to be determined, a number of search results to be returned, an amount of central processing unit resources, a memory utilization measure, a network load measure, a polling measure, a provider contribution indication, a caches utilization measure, a machine learning utilization measure, a routing indication, a search depth indication, a search processingtime limit, a measure for validating pre-computed search results, a search result complexity measure, a search side-processes indication.

3. The method of claim 1 or claim 2, comprising:

   in response to determining that the likelihood of the client selection is above a threshold, determining the number of processing parameters to indicate a greater amount of processing resources of the search platform to be utilized for processing the search request;
   in response to determining that the likelihood of the client selection is below the threshold, determining the number of processing parameters to indicate a lower amount of processing resources of the search platform to be utilized for processing the search request.

4. The method of any one of claims 1 to 3, wherein the likelihood of the client selection is determined by using a machine learning model.

5. The method of any one of claims 1 to 4, further comprising:
   in response to receiving a client selection for one or more of the returned search results, updating the statistical data.

6. The method of any one of claims 1 to 5, further comprising:
   in response to determining an absence of a client selection after a given period of time passed since returning at least a part of the number of search results, , updating the statistical data.

7. A search system comprising a search engine for receiving search requests from a client, the search system comprising at least one processor and memory storing instructions which, when executed by the at least one processor, makes the search system to perform the method oy any one of claims 1 to 6.

8. A computer program with program instructions which, when executed by at least one processor, implements the method of any one of claims 1 to 6.

FIG. 1

FIG. 2

**22**

Start → receiving search request

**24**

determining likelihood of client selection

**40**

**11**

statistical data

**26**

determining processing parameters

**28**

determining search results

**30**

returning search results

**42**

**32**

End ← updating

FIG. 3

**FIG. 4**

Search request  
12

Client selection model  
32

Higher client selection likelihood

Lower client selection likelihood

Higher processing search

Lower processing search  
34

**FIG. 5**

$P_{qos}$

Search parameter scenarios

Optimal configurations

Suboptimal configurations (abandoned)

1    2    3    R (e.g. number of CPUs)

EP 4 439 329 A1

FIG. 6

| ID | Parameter 1 | Parameter 2 | Parameter 3 | Number of search requests | Number of client selections |
|----|-------------|-------------|-------------|---------------------------|-----------------------------|
| 1 | AAA | BBB | 0 | 563 | 39 |
| 2 | SUP | GHI | 1 | 815 | 234 |
| 3 | POI | ZTR | 2 | 514 | 76 |
| 4 | DEF | BVC | 2 | 667 | 43 |
| 5 | EIN | MLP | 1 | 811 | 66 |
| 6 | CET | DAX | 0 | 2213 | 10 |

11

FIG. 7

EP 4 439 329 A1

**Search request**

**Model**

Uncertain / confidence below threshold
(~56% of search requests)

36% of client selections

High likelihood of client selection
(14 % of search requests)
62% of client selections

Low likelihood of client selection
(30% of search requests)

<2% of client selections

High processing

Low processing

**FIG. 8**

**100**

**102**    **103**

**101**

| CPU | User I/F | Network I/F |

**105**

**104**

Memory

**106**

**107**

Cache

**108**

Request
processing

**109**

Data processing
functionality

Static Memory

**FIG. 9**

Europäisches
Patentamt

European
Patent Office

Office européen
des brevets

# EUROPEAN SEARCH REPORT

Application Number

EP 23 31 5076

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/228094 A1 (AUBRY JEAN-PHILIPPE [US] ET AL) 25 July 2019 (2019-07-25) * paragraphs [0036] - [0045] * ----- | 1-8 | INV. G06F16/21 |
| X | EP 3 968 174 A1 (AMADEUS SAS [FR]) 16 March 2022 (2022-03-16) * paragraphs [0012] - [0022] * ----- | 1-8 | |
| A | RYAN MARCUS ET AL: "Bao: Learning to Steer Query Optimizers", ARXIV.ORG, CORNELL UNIVERSITY LIBRARY, 201 OLIN LIBRARY CORNELL UNIVERSITY ITHACA, NY 14853, 8 April 2020 (2020-04-08), XP091468288, DOI: 10.1145/3448016.3452838 * section 3 * ----- | 1-8 | |
| A | Anonymous: "Reinforcement learning - Wikipedia", , 16 July 2022 (2022-07-16), pages 1-16, XP093040754, Retrieved from the Internet: URL:https://en.wikipedia.org/w/index.php?title=Reinforcement_learning&oldid=1098616481 [retrieved on 2023-04-20] * Section "Exploration" * ----- | 1-8 | TECHNICAL FIELDS SEARCHED (IPC) G06F |

-/--

The present search report has been drawn up for all claims

| Place of search | Date of completion of the search | Examiner |
|---|---|---|
| The Hague | 14 September 2023 | Correia Martins, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DULAC-ARNOLD GABRIEL ET AL: "Challenges of real-world reinforcement learning: definitions, benchmarks and analysis", MACHINE LEARNING, SPRINGER US, NEW YORK, vol. 110, no. 9, 22 April 2021 (2021-04-22), pages 2419-2468, XP037803616, ISSN: 0885-6125, DOI: 10.1007/S10994-021-05961-4 [retrieved on 2021-04-22] * section 2 * ----- | 1-8 | |
| A | Hamadanian Pouya ET AL: "How Reinforcement Learning Systems Fail and What to do About It", , 5 April 2022 (2022-04-05), XP093081717, Retrieved from the Internet: URL:https://sidsen.azurewebsites.net/paper s/rlfail-euromlsys2022.pdf [retrieved on 2023-09-13] * abstract * ----- | 1-8 | |

TECHNICAL FIELDS SEARCHED (IPC)

The present search report has been drawn up for all claims

| Place of search | Date of completion of the search | Examiner |
|---|---|---|
| The Hague | 14 September 2023 | Correia Martins, F |

## ANNEX TO THE EUROPEAN SEARCH REPORT
## ON EUROPEAN PATENT APPLICATION NO.

EP 23 31 5076

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2023

| Patent document cited in search report | Publication date | Patent family member(s) | Publication date |
|---|---|---|---|
| US 2019228094 A1 | 25-07-2019 | NONE | |
| EP 3968174 A1 | 16-03-2022 | NONE | |

For more details about this annex : see Official Journal of the European Patent Office, No. 12/82